# EUROPEAN PATENT SPECIFICATION

(11) **EP 2 323 137 B1**
(45) Date of publication and mention of the grant of the patent: **25.11.2015**
(21) Application number: 09808449.4
(22) Date of filing: 19.02.2009
(51) Int. Cl.: G21C 3/34, G21C 3/33, G21C 3/322

(54) **SUPPORT GRID FOR THE FUEL ASSEMBLY OF A NUCLEAR REACTOR**
STÜTZGITTER FÜR EIN BRENNSTOFFBÜNDEL EINES KERNREAKTORS
GRILLE D'APPUI POUR L'ASSEMBLAGE DE COMBUSTIBLE D'UN RÉACTEUR NUCLÉAIRE

(30) Priority: 04.08.2008 RU 2008131829
(43) Date of publication of application: 18.05.2011
(73) Proprietor: Publichnoye Akcionernoe Obshchestvo "Mashinostroitelny Zavod", Elektrostal, 144001 (RU)
(72) Inventor: AKSENOV, Petr Mikhailovich, Moskovskaya obl. 144010 (RU); LUZAN, Yury Vasilyevich, Moskovskaya obl. 144004 (RU); SHATALOV, Vadim Borisovich, Moskovskaya obl. 144003 (RU); BYCHKOV, Vladimir Mikhailovich, Moskovskaya obl. 144001 (RU); SHUMIN, Vladimir Vitalyevich, Moskovskaya obl. 144010 (RU); KOLOSOV, Mikhail Igorevich, Moskovskaya obl. 144009 (RU); ROMANOV, Alexandr Ivanovich, N. Novgorod 603014 (RU); SHUMEEV, Alexandr Ivanovich, Moskovskaya obl. 142115 (RU)
(74) Representative: Einsel, Martin
(86) International application number: PCT/RU2009/000079
(87) International publication number: WO 2010/021565

(56) References cited:
- BE-A1- 744 910
- GB-A- 1 065 465
- RU-C1- 2 088 982
- RU-C1- 2 249 865
- RU-C2- 2 248 050
- RU-C2- 2 248 050
- US-A- 3 178 356
- US-A- 4 900 507

## Description

### FIELD OF THE INVENTION

The invention relates to nuclear power engineering, in particular, to fuel elements of a fuel assembly used substantially in WCPR-440 and WCPR-1000 nuclear reactors.

### BACKGROUND OF THE INVENTION

A support grid, for example, grid 445.20.030-04 for the WCPR-440 nuclear reactor known in the prior art has 102 openings in the shape of dumbbells for coolant flow, 12 openings 5.9 min in diameter, and 24 semi-openings along the support grid periphery for coolant flow. The dumbbell-type openings are each formed by two openings of 2.95 min radius joined together by an opening 5 min across. The openings for mounting the fuel elements and central tube have a diameter of 5^{+0.1}, with seven openings for fuel element plugs provided at the periphery of each side of the hexagonal support grid (see: B.D. Dementyev, "Nuclear Power Reactors," Energoatomizdat, Moscow, 1990, pp. 31-35) [1]. Some of the fuel element openings of the RK-3 support grid of the WCPR-440 nuclear reactor are used for mounting supporting tubes.

The prior art invention is disadvantageous because of anisotropy developing in the support grid structure caused by the shape and location of coolant flow openings relative to the longitudinal axis of the fuel elements, resulting in reduction in the strength and rigidity of the support grid; a significant difference in the configuration of the coolant flow openings and the elementary cell of the fuel element bundle and their asymmetrical position relative to the axis of the fuel elements that causes turbulence in the coolant flow at the exit thereof from the support grid into the space between the fuel elements; and the use of inefficient milling technique to make openings for coolant flow.

Another prior art support grid for the fuel assembly of a nuclear reactor is made in the form of a perforated plate having round openings, at least some of which are intended for fitting fuel element ends therein, and coolant flow openings that are hexagonal in shape, each of the three sides thereof facing similar openings is parallel to a line connecting the centers of adjacent cylindrical openings, and each of the three other sides facing the cylindrical openings is formed by an arc of a circle concentric with the adjacent round opening, the coolant flow openings being spaced equally around the cylindrical openings (see: RU 2,308,775 C1, October 20, 2007) [2].

This prior are invention is disadvantageous because of the complex shape of the coolant flow openings and, as a result, large labor inputs required to manufacture the grid by milling.

A prior art invention that is close to the claimed invention is a support grid for a fuel assembly, in which the coolant flow openings have a cylindrical shape and are positioned symmetrically about the openings provided for the bottom plugs of the fuel elements and tubular channels in groups of six around each of the foregoing, the periphery of each side of the hexagonal bottom support grid having eleven openings for the bottom plugs of the fuel elements, said eleven openings forming at right angles to the opposite side of the hexagonal bottom support grid parallel rows of alternating openings for the bottom plugs of the fuel elements and pairs of round coolant flow openings separated by the web of the bases thereof (see: RU 2,248,050 C2, published on March 10, 2005) [3]. This support grid has a more regular distribution of the stress-deformed state as compared to the grid of reference [1] that has a significant anisotropy.

The strength and rigidity of the grid are not, however, optimal because of the small thickness of the web between the openings, Another support grid in the form of a plate having round openings with two different diameters is known from prior art document US 3,178,356.

### SUMMARY OF THE INVENTION

It is an object of the present invention to develop a practical support grid having a high strength and rigidity owing to a different shape and location of coolant flow openings, which grid can be manufactured by existing technologies without affecting the technical allowances for the diameters of the openings.

The object of the invention is achieved in a support grid of the fuel assembly of a nuclear reactor, said grid being a plate having round coolant flow openings and round openings for mounting the fuel elements, central tube, and supporting tubes or guiding channels, the coolant flow openings being spaced equally in groups of six openings around each opening for mounting fuel elements, the central tube, and the supporting tubes or guiding channels, by using, according to the invention, coolant openings of two different diameters and positioning them around each of said openings such that the openings of two diameters alternate.

The coolant flow openings having two different diameters and alternating around the openings for mounting fuel elements and the central tube help achieve the desired technical result, in particular, a higher rigidity and strength of the grid that can be manufactured by existing technologies without affecting the technical allowances for the diameters of the openings.

Compared with the closest related prior art of reference [3], the claimed grid has a larger thickness of the webs (with the fuel element openings spaced at 12.3 mm in the fuel assembly of a WCPR-440, the web thickness increases by 16%) holding the fuel elements in place, giving it greater strength and allowing it to be manufactured by existing technologies without affecting the technical allowances for the diameters of the openings.

In one embodiment of the invention, some of the coolant flow openings of the smaller of the two diameters have a diameter equal to that of the openings used to mount the fuel elements and the central tube, the openings for mounting the fuel elements, the central tube, and the supporting tubes or guiding channels and the coolant flow openings of the same diameter being spaced equally relative to the remaining coolant flow openings.

### BRIEF DESCRIPTION OF THE DRAWINGS

The invention is illustrated in the drawing, wherein:

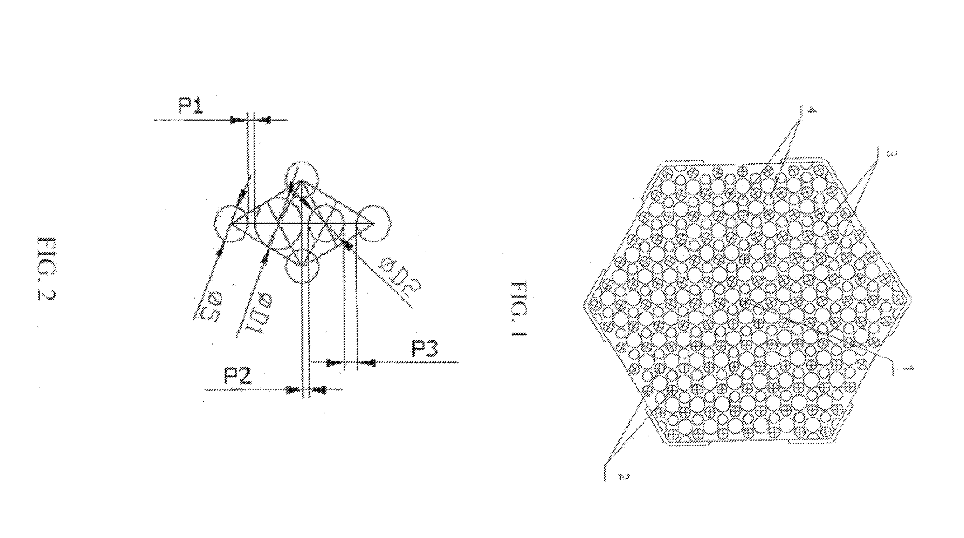

FIG. 1 is a view of an embodiment of the claimed grid.

### DESCRIPTION OF A PREFERRED EMBODIMENT

The present hexagonal grid has openings for mounting a central tube 1, openings 2 for mounting fuel elements, and coolant flow openings 3 and 4 of different diameters. Openings 3 and 4 are spaced equally and alternate in groups of six openings around openings 1 and 2. Consequently, three openings 3 of one diameter and three openings 4 of another diameter are provided around opening 1. Openings 4 have a diameter equal to the diameter of openings 2 used to mount fuel elements and central tube 1 that is smaller than the diameter of openings 3. Openings 2, openings 4 of the same diameter as openings 2, and opening 1 are spaced equally relative to remaining coolant flow openings 3.

The idea of the invention is explained in FIG. 2 wherein openings 3 and 4 having diameters D1 and D2, respectively, are only disposed at the centers of equilateral triangles, with openings 2 for fuel elements having a diameter of 5 mm (05) provided in the vertexes thereof. Openings 3 and 4 (D1 and D2) form the following webs:
P1 - between the openings of D1 and 05;
P2 - between the openings of D1 and D2; and
P3 - between the openings of D2 and 05.

Since the total minimum flow area is Sp = **6,856.76** mm² in the existing and claimed grids, the respective values of D2, P1, P2, and P3 have been calculated for several values of D1, considering the round-offs and errors in opening diameters, and also the accuracy of their location from the viewpoint of practical experience of modern program-controlled machine tools and cutting tools, and are shown in Table 1.

The grid of the closest related prior art has openings 3 and 4 of equal diameter, that is, D1 = D2. The table shows that whatever the variant with D1 > D2 for d, web P2 has a greater thickness that increases significantly the strength of the grid as a whole.

Any of variants 2 to 5 in Table 1 is practicable depending on which of webs P1 or P2 has a greater role, and, in the inventors' view, however, Variant 5 is preferred from the perspective of design and manufacture. Variant 5, in which openings 4 have a diameter equal to that of openings 2, has a practical value. In this variant, webs P1 and P2 have an equal thickness.

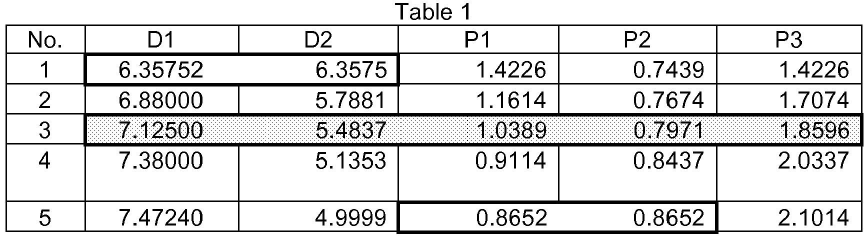

The dynamic characteristics of the structure were analyzed by the impact excitation method that helps obtain simultaneously the frequency spectrums of an external impact (force) and response (acceleration) of the points of the structure to the force applied. Oscillations produced upon impact are an energy transfer process of short duration. The impact force generates a continuous spectrum of a maximum amplitude at 0 Hz that decreases gradually with an increase in frequency. As a result, the structure is excited simultaneously within the full frequency range (depending on the characteristics of the impact hammer head.

The calculation results of natural oscillation frequencies and rigidity ratios are shown in Table 2.

| | **Dynamic tests** | | **Calculation** | |
|---|---|---|---|---|
| | **Natural frequency, Hz** | **Rigidity ratio** | **Natural frequency, Hz** | **Rigidity ratio** |
| **Prior art [1]** | **1,932.0** | **1** | **1,968.0** | **1** |
| RU 2,308,775 **[2]** | **2,475.0** | **1.84** | **2,518.9** | **1.84** |
| **This invention** | - | - | **2,587.4** | **1.64** |

## Claims

1. A support grid for a fuel assembly of a nuclear reactor in the form of a plate having round openings (3, 4) for the coolant flow and round openings for mounting fuel elements (2), a central tube (1), and supporting tubes or guiding channels, wherein the openings (3, 4) for the coolant flow have two different diameters and are provided around each of said openings (1, 2) such that the openings (3, 4) of two diameters alternate,
**characterized in that** the openings (3, 4) for the coolant flow are spaced equally in groups of six openings (3, 4) around each of the openings (2, 1) for the fuel elements, the central tube, and the supporting tubes or guiding channels.

2. The support grid as claimed in claim 1,
wherein some of the openings (4) for the coolant flow having the smaller of the two diameters have a diameter equal to the diameter of the openings (1, 2) for mounting the fuel elements and the central tube.

3. The support grid as claimed in claim 2,
wherein the openings(1, 2) for mounting the fuel elements, central tube, and the supporting tubes or guiding channels and the openings (4) for the coolant flow of a diameter equal to the diameter thereof are spaced equally relative to the remaining openings (3) for the coolant flow.

## Patentansprüche

1. Stützgitter für eine Brennstoffbaugruppe eines Kernreaktors in der Form einer Platte mit runden Öffnungen (3, 4) für die Kühlflüssigkeit und runden Öffnungen zur Befestigung von Brennelementen (2), einer zentralen Röhre (1), und Stützröhren oder Führungskanälen,
wobei die Öffnungen (3, 4) für die Kühlflüssigkeit zwei unterschiedliche Durchmesser besitzen und um jede der Öffnungen (1, 2) vorgesehen sind, sodass die Öffnungen (3, 4) mit den zwei Durchmessern abwechseln,
**dadurch gekennzeichnet,**
**dass** die Öffnungen (3, 4) für die Kühlflüssigkeit gleichmäßig in Gruppen von sechs Öffnungen (3, 4) um jede der Öffnungen (2, 1) für die Brennstoffelemente, die zentrale Röhre und die Stützröhren oder Führungskanäle beabstandet sind.

2. Stützgitter nach Anspruch 1,
in welchem einige der Öffnungen (4) für die Kühlflüssigkeit, die den kleineren der beiden Durchmesser aufweisen, einen Durchmesser besitzen, der gleich dem Durchmesser der Öffnungen (1, 2) zum Befestigen der Brennstoffelemente und der zentralen Röhre ist.

3. Stützgitter nach Anspruch 2,
in welchem die Öffnungen (1, 2) zur Befestigung der Brennstoffelemente, der zentralen Röhre und der Stützröhren oder Führungskanäle und der Öffnungen (4) für die Kühlflüssigkeit mit einem Durchmesser gleich dem Durchmesser davon relativ zu den verbleibenden Öffnungen (3) für die Kühlflüssigkeit gleichmäßig beabstandet sind.

## Revendications

1. Grille d'appui pour un assemblage de combustible d'un réacteur nucléaire en forme de plaque présentant des ouvertures rondes (3, 4) pour le liquide de refroidissement et des ouvertures rondes pour la mise en place d'éléments combustibles (2), d'un tube central (1) et de tubes d'appui ou canaux de guidage,
les ouvertures (3, 4) pour le liquide de refroidissement présentant deux diamètres différents et étant prévues autour de chacune des ouvertures (1, 2), de sorte qu'il y a alternance des ouvertures (3, 4) présentant les deux diamètres,
**caractérisé en ce que**
les ouvertures (3, 4) pour le liquide de refroidissement sont espacées régulièrement en groupes de six ouvertures (3, 4) autour de chacune des ouvertures (2, 1) pour les éléments combustibles, le tube central et les tubes d'appui ou canaux de guidage.

2. Grille d'appui selon la revendication 1,
dans laquelle quelques-unes des ouvertures (4) pour le liquide de refroidissement qui présentent le plus petit des deux diamètres ont un diamètre égal au diamètre des ouvertures (1, 2) destinées à la mise en place des éléments combustibles et du tube central.

3. Grille d'appui selon la revendication 2,
dans laquelle les ouvertures (1, 2) destinées à la mise en place des éléments combustibles, du tube central et des tubes d'appui ou canaux de guidage et les ouvertures (4) pour le liquide de refroidissement présentant un diamètre égal au diamètre de celles-ci sont espacées régulièrement relativement aux ouvertures restantes (3) pour le liquide de refroidissement.
